# EUROPEAN PATENT SPECIFICATION

(11) **EP 3 552 497 B1**
(45) Date of publication and mention of the grant of the patent: **04.09.2024**
(21) Application number: 18382244.4
(22) Date of filing: 09.04.2018
(51) Int. Cl.: A23D 7/005, A23L 13/40, A23C 19/093, A23K 20/158

(54) **A FATTY PREPARATION AND A PROCESS FOR MAKING SAID FATTY PREPARATION**
FETTZUBEREITUNG UND VERFAHREN ZUR HERSTELLUNG VON BESAGTER FETTZUBEREITUNG
PRÉPARATION GRASSE ET PROCÉDÉ DE FABRICATION DE LADITE PRÉPARATION GRASSE

(43) Date of publication of application: 16.10.2019
(73) Proprietor: Borges Agricultural & Industrial Edible Oils S.A.U., 25300 Tarrega (ES)
(72) Inventor: BENEDÍ SANTAMARIA, Carolina Cristina, 25300 TARREGA (ES); MARTÍN MARTÍN, Maria de la O, 28220 MAJADAHONDA (ES); GARCÍA BERROCAL, José Vicente, 28250 TORRELODONES (ES); ESTELLES BLAY, Pedro Antonio, 28864 Ajalvir (Madrid) (ES)
(74) Representative: Herrero & Asociados, S.L.

(56) References cited:
- EP-A1- 3 141 130
- FR-A1- 2 622 772
- US-A1- 2013 171 317
- US-A1- 2017 013 855
- DATABASE GNPD [online] MINTEL; 6 June 2016 (2016-06-06), ANONYMOUS: "Frankfurter Sausage", XP055821481, retrieved from https://www.gnpd.com/sinatra/recordpage/4038731/ Database accession no. 4038731

## Description

### FIELD OF THE INVENTION

The present invention relates to the field of foodstuff. In particular, the present invention relates to a fatty preparation which does not comprise fats with a plant origin saturated fat content higher than 25% by weight nor fats with an animal origin saturated fat content higher than 15% by weight nor trans fats, which are harmful for health and a process for making such fatty preparation.

### BACKGROUND

The discussion about the use of palm oil in the processed food industry has marked the entire sector in recent months. However, while the social and media pressure grows against a foodstuff whose nutritional properties and its productive process are questioned, the sector is betting more than ever on this ingredient.

The first data of 2017 show that the trend continues to rise. According to the trade register, palm oil has been imported by a value of 216 million between January and February, almost twice as much as in the same months of the previous year.

However, the sector intends to calm the discussion about this product. Sources of the Spanish processed food industry assure that the properties of this ingredient "allow to enjoy a wide range of safe products for human consumption". In particular, it is highlighted that it allows to extend the useful life of food.

There are many voices which have criticized the use of this food. On the one hand, NGOs and environmental organizations have criticized the environmental impact of their production. But the criticism of palm oil is made, above all, from the point of view of health. In 2016, the European Food Safety Agency (EFSA) conducted an assessment of three potential food contaminants: glycidyl fatty acid esters (GE), 3-monochloropropanediol (3-MCPD), and 2-monochloropropanediol (2-MCPD). These substances are present in many different oils and fats, although, the highest levels of GE, 3-MCPD, and 2-MCPD are found in palm oil and palm fats. They are formed during food processing, particularly when refining oils at high temperatures (about 200°C). For consumers aged three and above, margarines and 'pastries and cakes' were the main sources of exposure to all substances.

The present inventors have particularly focused on the meat sector. The meat sector occupies the fourth industrial sector in Spain. Within the food industry occupies the first place, representing more than 21.6% of the entire sector. Within the Spanish meat sector, the most widespread consumption is that of the pig, this being the only one that presents increases in consumption, compared to cattle, sheep or goats that tend to decrease.

In order to improve meat products, the meat industry has developed several open innovation lines aimed at:
1. Reduction of fat (like pig fat) in cooked and cured products: For this, they are working with solutions that allow the total or partial replacement of animal fats with ingredients that provide added value: improved proteins or vegetable oils, enriched in omega 3 and 6, antioxidants, vegetable fiber...
2. Reduction of salt content: Despite its importance in the technological processes of curing and conservation, it is proceeding to reduce or replace its presence with other ingredients with its same technological function.

### 4. Reduction of nitrites and nitrates in the formulations

### 5. Less aggressive preservation techniques such as pulsed light or UV light.

This problem has led to the present inventors to develop alternative products to animal fats in order to manufacture other more complex food products that will get to the final consumer, therefore, meat, cheese or even food for animals. Animal fats also have a high content of saturated acids, reaching the same content as palm fat and this is why they are also to be avoided. If tropical fat can be replaced, it may also be possible to replace meat fat. Likewise, other fatty acids which can also be harmful to health are also intended to be removed from compositions for human or animal food.

US 2017/013855 discloses a fatty preparation containing canola (or rapeseed) oil, water, locust bean gum (or carob), carrageenan and xanthan gum. EP 3141130 A1 discloses a fatty preparation containing sunflower oil, water, carob, carrageenan, lactic acid, and xanthan gum. US 2013/171317 A1 discloses a process for making a meat-fat substitute, comprising:
- weighing dry ingredients amongst which carob and carrageenan can be present,
- adding them to water,
- adding a vegetable oil,
- heating the mixture at 95°C.

Accordingly, the present inventors provide a new fatty preparation, a process for making thereof and products containing thereof that solve the above mentioned problems. In particular, they have achieved the following goals:
- Reduction of animal fat content
- Decrease of saturated fats with respect to bacon and/or lard
- Decrease in the energy value with respect to animal fats
- Rich in oleic and linoleic fatty acids.
- Staining is allowed. The addition of vitamins and minerals is also allowed.
- Possibility of removing water from the original recipes
- Without cholesterol contribution
- Greater technological fluidity of the mass in the machinery. Less loss of material during processing.
- Reduction of the curing time of meat products (sausages)
- Increase the juiciness of processed fresh meat products (hamburgers)

### SUMMARY OF THE INVENTION

The present invention concerns a fatty preparation and a method for preparing it, as set forth in the appended claims.

### DETAILED DESCRIPTION OF THE INVENTION

The technical disclosure set out below may in some respects go beyond the scope of the claims. Elements of the disclosure which do not fall within the scope of the claims are provided for information purposes only.

In a first aspect, the present invention relates to a process for making a fatty preparation to be incorporated in a meat or cheese product or in a product for feeding animals, wherein said fatty preparation does not comprise fats with a plant origin and a saturated fat content higher than 25% by weight nor fats with an animal origin and a saturated fat content higher than 15% by weight nor trans fats, comprising the steps of:
a) weighing and mixing solid or dilution ingredients comprising 1 and 12% w/w of carob and 1 and 12% w/w of carrageenan;
b) heating 1 and 50% w/w of water to at least 60°C in a cutter-type mixer;
c) adding the ingredients of step a) into the heated cutter-type mixer of step b) until obtaining an homogeneous solution;
d) adding 1 and 50% w/w of an oil selected from the group consisting of high oleic sunflower oil, olive oil, extra virgin olive oil, sunflower seed oil, rapeseed oil and grapeseed oil until obtaining an emulsion without observing oil.

In a further embodiment, said process further comprises the step of:
e) packing the emulsion obtained in step d). This packing step can be carried out under vacuum or without vacuum, with heat-sealable sheet or induction, in bags or boxes, in cube, in shrink, extruded,...

In another further embodiment, said process further comprises the step of:
f) introducing said packed emulsion in a refrigerator or storing it at room temperature.

In the context of the present invention the term "a plant origin saturated fat" is understood as plant origin fatty acids which do not have double bonds in their chain. Examples thereof include, but are not limited to, palm or coconut oil.

Likewise, the term "an animal origin saturated fat" as animal origin fatty acids which do not have double bonds in their chain. Examples thereof include, but are not limited to, lard, marbling, bacon.

The term "trans fats" is understood as unsaturated fats that are formed in the industrial processing of some foods known as hydrogenation, during which their configuration is changed. Examples thereof include, but not limited thereto, partially hydrogenated fats.

The term "meat product" is understood as processed products resulting from the processing of the meat or from the new processing of said processed products, so that the cutting surface shows that the product no longer possesses the characteristics of fresh meat. Preferably, said meat product is processed meat, cured cold meat, fresh cold meat cooked cold meat, pâté, "sobrassada".

The term "cheese product" is understood as substitutes for cheese that do not contain milk, lactose, caseinates or fats of milk origin. Preferably, said cheese product is block cheese.

The term "product for feeding animals" is understood as a food intended for consumption preferably for pets (dogs and cats). The process of using fat is similar to that of human consumption and therefore it can be applied as the case of meat for human consumption. In a preferred embodiment, the ingredients in step a) further comprises at least one of: cellulose, pectin, xanthan, guar gum, gum Arabic, meal, starch, salt, agar-agar, soy lecithin, sunflower lecithin, antioxidant, beta-carotene, colorant, preservative and aroma. A person of ordinary skill in the art can choose one or another or a combinations thereof depending on the final purpose. The present invention specifically encompass the individual addition of said ingredients or of any group (at least two ingredients) of said other ingredients in the fatty preparation.

The step c) and the step d) are carried out independently each other, preferably, at a speed between 40 and 25.000 rpm.

In another preferred embodiment, an anhydrous citric acid aqueous solution or solid citric acid or lactic acid or acetic acid or a mixture thereof is added in step c). This is particularly useful in products not thermally treated: cured, fresh cold meat ...

In a yet further preferred embodiment of the process, the fatty preparation is incorporated in a meat or cheese product selected from processed meat, cured cold meat, fresh cold meat, cooked cold meat, pâté, "sobrassada" and block cheese.

In a second aspect, the present invention relates to a fatty preparation comprising the following components:
a) an oil selected from the group consisting of high oleic sunflower oil, olive oil, extra virgin olive oil, sunflower seed oil, rapeseed oil and grapeseed oil in a range between 1 and 50% w/w;
b) water in a range between 1 and 50% w/w;
c) carob in a range between 1 and 12% w/w; and
f) carrageenan in a range between 1 and 12% w/w;

provided that the sum of all the components in the final composition is equal or lower than 100% w/w;
wherein said fatty preparation does not comprise fats with a plant origin saturated fat content higher than 25% by weight nor fats with an animal origin saturated fat content higher than 15% by weight nor trans fats.

In a further embodiment, said fatty preparation further comprises at least one of: citric acid or lactic acid or acetic acid or a mixture thereof, cellulose, pectin, xanthan, guar gum, gum Arabic, meal, starch, salt, agar-agar, soy lecithin, sunflower lecithin, antioxidant, beta-carotene, colorant, preservative and aroma. A person of ordinary skill in the art can choose one or another or a combination thereof depending on the final purpose. The present invention specifically encompasses the individual addition of said ingredients or of any group (at least two ingredients) of said other ingredients in the fatty preparation.

In another preferred embodiment, the following components are independently present in the final composition in the following ranges (% w/w):
a) citric acid or lactic acid or acetic acid or a mixture thereof in a range between 1 and 50%;
b) cellulose in a range between 1 and 40%;
c) pectin in a range between 1 and 4%; and
d) xanthan in a range between 1 and 3%,
provided that the sum of the all the components in the final composition is equal or lower than 100%.

The invention will now be further described by way of the following non-limiting examples.

### EXAMPLES

### Example 1

In order to make chorizo, the following fat formula is used:

### Ingredients (by weight):

45% Oil
25% Water
10% carrageenan
10% Carob Gum
10% Cellulose

### Process:

a) In a specific mixer with cutter-type blades, hot water is added above 60°C.
b) The solid elements (carrageenan, carob gum and cellulose) are then added.
c) The ingredients are mixed at a suitable speed until observing a thick solution.
d) Oil is slowly but uninterruptedly added; initially at a slow speed which is gradually increased to maximum power, keeping it then constant for the time of the emulsion until it is solidified.
e) Once the Fat formulation is made, it is stored in a cold chamber (4°C) without covering for 4 hours. After this time, it is covered.
f) The fat can be used at least 24 hours after its manufacture.

### Cured Chorizo:

The cured chorizos are elaborated following a traditional recipe, replacing the complete the percentage of animal fat with the fat formulation of the invention. The meat product as obtained has similar characteristics to those of the original product made with animal fat.

### Example 2

In order to make a hamburger, the following fat formula is used:

### Ingredients (by weight):

Liquids:
   40% Oil
   20% Water
Solids:
   8% carrageenan
   8% Carob Gum
   5% Pectin
   3% Xanthan
   10% soy lecithin
   6% guar gum

### Process:

a) In a specific mixer with cutter-type blades, hot water is added above 60°C.
b) The solid elements are then added.
c) The ingredients are mixed at a suitable speed until observing a thick solution.
d) Oil is slowly but uninterruptedly added; initially at a slow speed which is gradually increased to maximum power, keeping it then constant for the time of the emulsion until it is solidified.
e) Once the Fat formulation is made, it is stored in a cold chamber (4°C) without covering for 4 hours. After this time, it is covered.
f) The fat can be used at least 24 hours after its manufacture.

### Hamburger.

The hamburgers are elaborated following a traditional recipe, replacing the complete the percentage of animal fat with the fat formulation of the invention. The meat product as obtained has similar characteristics to those of the original product made with animal fat.

### Example 3

In order to make a pâté, the following fat formula is used:

### Ingredients (by weight):

Liquids:
   30% Oil
   40% Water
Solids:
   10% carrageenan
   7% Carob Gum
   3% Pectin
   10% cellulose

### Process:

a) In a specific mixer with cutter-type blades, hot water is added above 60°C.
b) The solid elements are then added.
c) The ingredients are mixed at a suitable speed until observing a thick solution.
d) Oil is slowly but uninterruptedly added; initially at a slow speed which is gradually increased to maximum power, keeping it then constant for the time of the emulsion until it is solidified.
e) Once the Fat formulation is made, it is stored in a cold chamber (4°C) without covering for 4 hours. After this time, it is covered.
f) The fat can be used at least 24 hours after its manufacture.

### Paté:

The paté is elaborated following a traditional recipe, replacing the complete the percentage of animal fat with the fat formulation of the invention. The meat product as obtained has similar characteristics to those of the original product made with animal fat.

### Example 4

In order to make "sobrassada", the following fat formula is used:

### Ingredients (by weight):

Liquids:
   35% Oil
   30% Water
Solids:
   10% carrageenan
   5% Carob Gum
   15% agar-agar
   3% Pectin
   2% xanthan

### Process:

a) In a specific mixer with cutter-type blades, hot water is added above 60°C.
b) The solid elements are then added.
c) The ingredients are mixed at a suitable speed until observing a thick solution.
d) Oil is slowly but uninterruptedly added; initially at a slow speed which is gradually increased to maximum power, keeping it then constant for the time of the emulsion until it is solidified.
e) Once the Fat formulation is made, it is stored in a cold chamber (4°C) without covering for 4 hours. After this time, it is covered.
f) The fat can be used at least 24 hours after its manufacture.

### "Sobrassada":

The "sobrassada" is elaborated following a traditional recipe, replacing the complete the percentage of animal fat with the fat formulation of the invention. The meat product as obtained has similar characteristics to those of the original product made with animal fat.

## Claims

1. Process for making a fatty preparation to be incorporated in a meat or cheese product or in a product for feeding animals, wherein said fatty preparation does not comprise fats with a plant origin and a saturated fat content higher than 25% by weight nor fats with an animal origin and a saturated fat content higher than 15% by weight nor trans fats, comprising the steps of:
a) weighing and mixing solid or dilution ingredients comprising 1 and 12% w/w of carob and 1 and 12% w/w of carrageenan;
b) heating 1 and 50% w/w of water to at least 60°C in a cutter-type mixer;
c) adding the ingredients of step a) into the heated cutter-type mixer of step b) until obtaining an homogeneous solution;
d) adding 1 and 50% w/w of an oil selected from the group consisting of high oleic sunflower oil, olive oil, extra virgin olive oil, sunflower seed oil, rapeseed oil and grapeseed oil until obtaining an emulsion without observing oil.

2. Process according to claim 1, further comprising the step of: e) packing the emulsion obtained in step d).

3. Process according to claim 2, further comprising the step of:
f) introducing said packed emulsion in a refrigerator or storing it at room temperature.

4. Process according to any of claims 1 to 3, wherein the ingredients in step a) further comprises at least one of: cellulose, pectin, xanthan, guar gum, gum Arabic, meal, starch, salt, agar-agar, soy lecithin, sunflower lecithin, antioxidant, beta-carotene, colorant, preservative and aroma.

5. Process, according to any of the preceding claims, wherein independently each other the step c) and the step d) are carried out at a speed between 40 and 25.000 rpm.

6. Process, according to any of the preceding claims, wherein an anhydrous citric acid aqueous solution or solid citric acid or lactic acid or acetic acid or a mixture thereof is added in step c).

7. Process, according to any of the preceding claims, wherein said fatty preparation is incorporated in a meat or cheese product selected from processed meat, cured cold meat, fresh cold meat cooked cold meat, pâté, "sobrassada" and block cheese.

8. Fatty preparation comprising the following components:
a) an oil selected from the group consisting of high oleic sunflower oil, olive oil, extra virgin olive oil, sunflower seed oil, rapeseed oil and grapeseed oil in a range between 1 and 50% w/w;
b) water in a range between 1 and 50% w/w;
c) carob in a range between 1 and 12% w/w; and
f) carrageenan in a range between 1 and 12% w/w;
provided that the sum of all the components in the final composition is equal or lower than 100% w/w;
wherein said fatty preparation does not comprise fats with a plant origin and a saturated fat content higher than 25% by weight nor fats with an animal origin and a saturated fat content higher than 15% by weight nor trans fats.

9. Fatty preparation according to claim 8, further comprising at least one of: citric acid or lactic acid or acetic acid or a mixture thereof, cellulose, pectin, xanthan, guar gum, gum Arabic, meal, starch, salt, agar-agar, soy lecithin, sunflower lecithin, antioxidant, beta-carotene, colorant, preservative and aroma.

10. Fatty preparation according to any of claims 8 to 9, wherein the following components are independently present in the final composition in the following ranges (% w/w):
a) citric acid or lactic acid or acetic acid or a mixture thereof in a range between 1 and 50%;
b) cellulose in a range between 1 and 40%;
c) pectin in a range between 1 and 4%; and
d) xanthan in a range between 1 and 3%,
provided that the sum of the all the components in the final composition is equal or lower than 100%.

## Patentansprüche

1. Verfahren zur Herstellung einer Fettzubereitung zur Einarbeitung in ein Fleisch- oder Käseprodukt oder in ein Produkt zur Fütterung von Tieren, wobei die Fettzubereitung weder Fette pflanzlichen Ursprungs mit einem Gehalt an gesättigtem Fett über 25 Gew.-% noch Fette tierischen Ursprungs mit einem Gehalt an gesättigtem Fett über 15 Gew.-% oder Transfette umfasst, folgende Schritte umfassend:
a) Wiegen und Mischen von Feststoff- oder Verdünnungsbestandteilen, die 1 und 12 Gew.-% Johannisbrot und 1 und 12 Gew.-% Carrageen umfassen;
b) Erhitzen von 1 und 50 Gew.-% Wasser auf zumindest 60 °C in einem Mischer vom Schneidetyp;
c) Zugeben der Bestandteile aus Schritt a) in den erhitzten Mischer vom Schneidetyp aus Schritt b), bis eine homogene Lösung erhalten wird,
d) Zugeben von 1 und 50 Gew.-% eines Öls, das aus der aus Sonnenblumenöl mit hohem Ölsäuregehalt, Olivenöl, extra nativem Olivenöl, Sonnenblumenöl, Rapsöl und Traubenkernöl bestehenden Gruppe ausgewählt ist, bis eine Emulsion ohne erkennbares Öl erhalten wird.

2. Verfahren nach Anspruch 1, das weiters folgenden Schritt umfasst: e) Verpacken der in Schritt d) erhaltenen Emulsion.

3. Verfahren nach Anspruch 2, das weiters folgenden Schritt umfasst:
f) Geben der verpackten Emulsion in einen Kühlschrank oder Lagern bei Raumtemperatur.

4. Verfahren nach einem der Ansprüche 1 bis 3, wobei die Bestandteile in Schritt a) weiters zumindest einen der folgenden umfassen: Cellulose, Pektin, Xanthan, Guargummi, Gummi arabicum, Schrotmehl, Stärke, Salz, Agar-Agar, Sojalecithin, Sonnenblumenlecithin, ein Antioxidans, beta-Carotin, einen Farbstoff, ein Konservierungsmittel und ein Aroma.

5. Verfahren nach einem der vorangegangenen Ansprüche, wobei Schritt c) und Schritt d) unabhängig voneinander bei einer Geschwindigkeit zwischen 40 und 25.000 U/min ausgeführt werden.

6. Verfahren nach einem der vorangegangenen Ansprüche, wobei eine wasserfreie wässrige Citronensäurelösung oder feste Citronensäure oder Milchsäure oder Essigsäure oder ein Gemisch davon in Schritt c) zugegeben wird.

7. Verfahren nach einem der vorangegangenen Ansprüche, wobei die Fettzubereitung in ein Fleisch- oder Käseprodukt eingearbeitet wird, das aus verarbeitetem Fleisch, gepökeltem kaltem Fleisch, frischem kaltem Fleisch, gekochtem kaltem Fleisch, Pâte, "Sobrassada" und Blockkäse ausgewählt ist.

8. Fettzubereitung, welche die folgenden Bestandteile umfasst:
a) ein Öl, das aus der aus Sonnenblumenöl mit hohem Ölsäuregehalt, Olivenöl, extra nativem Olivenöl, Sonnenblumenöl, Rapsöl und Traubenkernöl bestehenden Gruppe ausgewählt ist, in einer Menge zwischen 1 und 50 Gew.-%;
b) Wasser in einem Bereich zwischen 1 und 50 Gew.-%;
c) Johannisbrot in einem Bereich zwischen 1 und 12 Gew.-%; und
d) Carrageen in einem Bereich zwischen 1 und 12 Gew.-%;
mit der Maßgabe, dass die Summe aller Bestandteile in der Endzusammensetzung gleich oder weniger als 100 Gew.-% ausmacht;
wobei die Fettzubereitung keine Fette pflanzlichen Ursprungs mit einem Gehalt an gesättigtem Fett über 25 Gew.-% noch Fette tierischen Ursprungs mit einem Gehalt an gesättigtem Fett über 15 Gew.-% oder Transfette umfasst.

9. Fettzubereitung nach Anspruch 8, die weiters zumindest eines der Folgenden umfasst: Citronensäure oder Milchsäure oder Essigsäure oder ein Gemisch davon, Cellulose, Pektin, Xanthan, Guargummi, Gummi arabicum, Schrotmehl, Stärke, Salz, Agar-Agar, Sojalecithin, Sonnenblumenlecithin, ein Antioxidans, beta-Carotin, einen Farbstoff, ein Konservierungsmittel und ein Aroma.

10. Fettzubereitung nach einem der Ansprüche 8 bis 9, wobei die folgenden Bestandteile in der Endzusammensetzung unabhängig in folgenden Bereichen (Gew.-%) vorhanden sind:
a) Citronensäure oder Milchsäure oder Essigsäure oder ein Gemisch davon in einem Bereich zwischen 1 und 50 %,
b) Cellulose in einem Bereich zwischen 1 und 40 %;
c) Pektin in einem Bereich zwischen 1 und 4 %; und
d) Xanthan in einem Bereich zwischen 1 und 3 %,
mit der Maßgabe, dass die Summe aller Bestandteile in der Endzusammensetzung gleich oder weniger als 100 % ist.

## Revendications

1. Procédé de fabrication d'une préparation grasse à incorporer dans un produit à base de viande ou de fromage ou dans un produit destiné à l'alimentation des animaux, dans lequel ladite préparation grasse ne comprend ni graisses d'origine végétale et ayant une teneur en graisses saturées supérieure à 25 % en masse ni graisses d'origine animale et ayant une teneur en graisses saturées supérieure à 15 % en masse ni acides gras trans, comprenant les étapes de :
a) peser et mélanger les ingrédients solides ou à diluer comprenant de 1 à 12 % M/M de caroube et de 1 à 12 % M/M de carraghénine ;
b) chauffer 1 à 50 % M/M d'eau à au moins 60 °C dans un mélangeur de type coupe-légumes ;
c) ajouter les ingrédients de l'étape a) dans le mélangeur de type coupe-légumes de l'étape b) jusqu'à obtention d'une solution homogène ;
d) ajouter 1 à 50 % M/M d'une huile choisie dans le groupe constitué par l'huile de tournesol riche en acide oléique, l'huile d'olive, l'huile d'olive vierge extra, l'huile de graines de tournesol, l'huile de colza et l'huile de pépins de raisin jusqu'à obtention d'une émulsion sans observer d'huile.

2. Procédé selon la revendication 1, comprenant en outre l'étape de :
e) emballer l'émulsion obtenue dans l'étape d).

3. Procédé selon la revendication 2, comprenant en outre l'étape de :
f) introduire ladite émulsion emballée dans un réfrigérateur ou son stockage à température ambiante.

4. Procédé selon l'une quelconque des revendications 1 à 3, dans lequel les ingrédients dans l'étape a) comprennent en outre au moins l'un de : la cellulose, la pectine, le xanthane, la gomme guar, la gomme arabique, la farine, l'amidon, le sel, l'agar-agar, la lécithine de soja, la lécithine de tournesol, un antioxydant, le bêta-carotène, un colorant, un conservateur et un arôme.

5. Procédé selon l'une quelconque des revendications précédentes, dans lequel, indépendamment l'une de l'autre, l'étape c) et l'étape d) sont effectuées à une vitesse comprise entre 40 et 25 000 tr/min.

6. Procédé selon l'une quelconque des revendications précédentes, dans lequel une solution aqueuse d'acide citrique anhydre, de l'acide citrique solide, de l'acide lactique, de l'acide acétique ou un mélange d'entre eux est ajouté dans l'étape c).

7. Procédé selon l'une quelconque des revendications précédentes, dans lequel ladite préparation grasse est incorporée dans un produit à base de viande ou de fromage choisi parmi la viande transformée, la viande froide séchée, la viande froide fraîche, la viande froide cuite, le pâté, la soubressade et le fromage en bloc.

8. Préparation grasse comprenant les composants suivants :
a) une huile choisie dans le groupe constitué par l'huile de tournesol riche en acide oléique, l'huile d'olive, l'huile d'olive vierge extra, l'huile de graines de tournesol, l'huile de colza et l'huile de pépins de raisin dans une gamme comprise entre 1 et 50 % M/M ;
b) de l'eau dans une gamme comprise entre 1 et 50 % M/M ;
c) de la caroube dans une gamme comprise entre 1 et 12 % M/M ; et
f) de la carraghénine dans une gamme comprise entre 1 et 12 % M/M ;
à condition que la somme de tous les composants dans la composition finale soit égale ou inférieure à 100 % M/M/ ;
dans laquelle ladite préparation grasse ne comprend ni graisses d'origine végétale et ayant une teneur en graisses saturées supérieure à 25 % en masse ni graisses d'origine animale et ayant une teneur en graisses saturées supérieure à 15 % en masse ni acides gras trans.

9. Préparation grasse selon la revendication 8, comprenant en outre au moins l'un de : la cellulose, la pectine, le xanthane, la gomme guar, la gomme arabique, la farine, l'amidon, le sel, l'agar-agar, la lécithine de soja, la lécithine de tournesol, un antioxydant, le bêta-carotène, un colorant, un conservateur et un arôme.

10. Préparation grasse selon l'une quelconque des revendications 8 à 9, dans laquelle les composants suivants sont indépendamment présents dans la composition finale dans les gammes suivantes (% M/M) :
a) de l'acide citrique, de l'acide lactique, de l'acide acétique ou un mélange d'entre eux dans une gamme comprise entre 1 et 50 % ;
b) de la cellulose dans une gamme comprise entre 1 et 40 % ;
c) de la pectine dans une gamme comprise entre 1 et 4 % ; et
d) du xanthane dans une gamme comprise entre 1 et 3 %, à condition que la somme de tous les composants dans la composition finale soit égale ou inférieure à 100 %.
